# EUROPEAN PATENT SPECIFICATION

(11) **EP 0 452 011 B1**
(45) Date of publication and mention of the grant of the patent: **02.07.1997**
(21) Application number: 91302805.6
(22) Date of filing: 28.03.1991
(51) Int. Cl.: H04Q 7/20, H04B 1/38, H04B 1/034

(54) **Hand-held transceiver as a modular unit**
Handfunksprechgerät in Modulaufbau
Emetteur-récepteur portable comportant des unités modulaires

(30) Priority: 29.03.1990 FI 901586
(43) Date of publication of application: 16.10.1991
(73) Proprietor: NOKIA MOBILE PHONES LTD., 24101 Salo (FI)
(72) Inventor: Heinonen, Jarmo, SF-24100 Salo (FI)
(74) Representative: Johansson, Folke Anders

(56) References cited:
- EP-A- 0 159 670
- EP-A- 0 347 166
- US-A- 4 593 155

## Description

The present invention relates to a radio transceiver device according to the introduction of claim 1 and, in particular, the use of its hand-held transceiver as a modular unit.

Nowadays both car telephones and hand-held transceivers are used in the radio telephone networks. The major difference between them is that the car telephone has more output power and therefore also more requirements as to the noise and spurious response rejection. In this application the characteristics of the car telephone also refer to the characteristics of the hand-held transceiver and its amplifier or booster combinations.

The objective of the invention is to provide a hand-held transceiver the characteristics of which do not change in any essential way when making it connectable to an amplifier device. Then the characteristics of the assembly formed by the combination are essentially as good as those of the car telephones. Another aim of the present invention is to provide such a hand-held transceiver the use of which, as a whole or of its parts, will be possible in a modular way as different combinations in connection with amplifying devices.

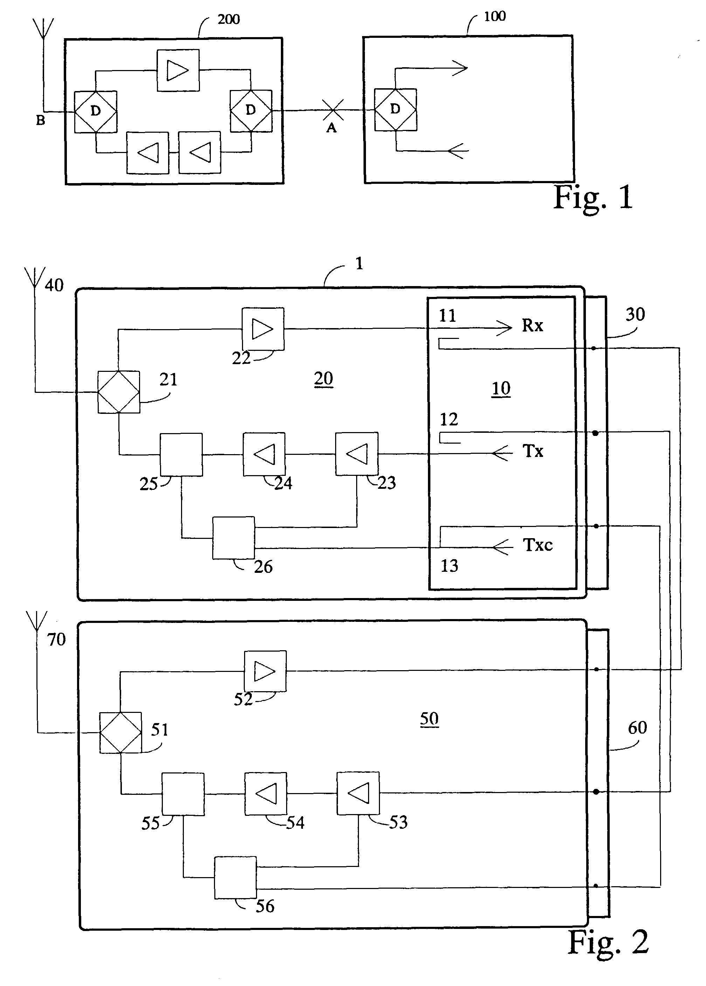

Figure 1 shows a known embodiment to achieve multiple use where the connecting point between the hand-held transceiver 100 and the amplifying device 200 is the antenna connector A in Fig. 1. Instead of a normal antenna, the hand-held transceiver is connected with an amplifier or a booster. In this case the branchers or duplex filters D divide the transmission and reception frequencies within the amplifier into respective branches to be amplified respectively. In this known embodiment there is the disadvantage of the difficulty to obtain the characteristics required for hand-held transceivers. The two separate duplex filters between the hand-held transceiver and the booster add very much to the attenuation. The extensive amplifying required for the booster preamplifier then causes extensive requirements for the spurious response that cannot easily be carried out in the high-frequency element. This problem has been partly circumvented by adding the direct voltage input power in the hand-held transceiver. The increased power consumption leads, however, to a shortened life of the hand-held transceivers, or to the use of bigger batteries, thus being totally contrary to modern objectives.

EP-A-0 159 670 describes a radio communication device having a portable communication device and a power amplifier device for amplifying a transmitter output from the communication device. It further includes a detector circuit for detecting that an electrical coupling between the portable communication device and the power amplifier is established, thereby keeping the transmitter output power level to a minimum.

At the technology level, as in the above mentioned embodiment, it is necessary to use expensive components for the connections (among others, the filters required by the duplex devices). One of the objectives of the present invention is also providing cheaper connections.

The above mentioned objectives will, according to the invention, be reached by the characteristics of claim 1. In the transceiver, such an interface will be formed whereby the amplifier device can be connected in a simple way. This interface enables the optimized dimensions of the amplifying elements in the transceiver and in the amplifiers, by which it is possible, in an essential way, to eliminate the above mentioned higher requirements set for the technical level regarding the noise and spurious resonance levels. To achieve these objectives, the signal to be received has to be amplified in the amplifier element, in order to eliminate e.g. the above mentioned need to increase the current in the amplifier of the high-frequency amplifying element and in order to comply with the requirements of the equipment also when the amplifying element is connected to it.

According to the invention, the transceiver or its base element may also be used as a modular unit with the amplifier device for different purposes.

The invention is described in the following by using some embodiment examples and with references to the accompanying drawings where:
Fig. 1 shows a state-of-art level hand-held transceiver and a connector of the amplifying device; and
Fig. 2 shows a principle diagram of the interface of the base element of the hand-held transceiver according to this invention and its connection to the amplifier element and the amplifying device.

Fig. 2 shows a radio telephone device comprising a hand-held transceiver 1 connectable to a separate amplifying device 50. The hand-held transceiver 1 features a antenna connection 40 of its own and it may be operated fully independently as a radio telephone.

The hand-held transceiver 1 comprises the base element 10 and the high-frequency amplifier element 20 between which there is a defined interface including the terminals 11, 12, and 13 for the reception signal Rx, for the transmission signal Tx and, respectively, for the power level control signal Txc. The amplifying element includes a duplex filter 21, an input direction amplifier 22 and, in the branch of the output direction, amplifiers 23, 24 and the control circuits 25, 26 of the power level. Further structural details of the base element and those of the amplifying element are not described here in detail as they are well known as such.

The interface signals Rx and Tx may be connected to the amplifying element 20 or to the outer amplifying device 50 e.g. by the directional switches in the terminals 11, 12 or by power distribution/summing switch solutions (not shown) carried out by passive components. It is possible to switch into the control lines Txc of the transmitter directly and parallelly in terminal 13. The electric connections of the hand-held transceiver have been concentrated in terminal 30 for the connection of an outer amplifier; inside the hand-held transceiver there is a corresponding connection interface, e.g. in the form of a circuit card connector.

As the amplifying element 50 also includes the amplifier 52 of the received signal, the interface can be selected advantageously from the point of view of the signal levels and the high noise immunity and then it can be carried out without any specific and expensive radio frequency (RF) terminals. The interface can be, for specific purposes, selected as being of low, middle and/or radio frequency type.

The interface according to this invention, between the base element of the hand-held transceiver and the amplifying devices, is technically a good point. The transmission signal Tx level is still low at the terminal 12 because it will be amplified in the amplifying element. On the other hand, the received signal has already been amplified in the amplifying element, before switching it to terminal point 11. Thus the terminal will charge the hand-held transceiver and its base element as little as possible and the terminals can be selected as advantageous components. In addition, the interface is non-critical, as far as its characteristics are concerned, and thus it is possible to consider such an assembly where the hand-held transceiver 1 and the amplifier 50 are physically located farther away from each other as usual, spaced by several metres.

If needed, the hand-held transceiver 1 is connected through terminal 30 to a cable and by that to terminal 60 of the amplifying device 50. For this a Tx cable, a Rx cable, and a Txc and other control line wirings are needed. The amplifying device 50 in the circuit diagram of Fig. 2 essentially includes the same elements (51 to 56) as the amplifying element 20 of the hand-held transceiver (those from 21 to 26) although there may be differences in their dimensions, e.g. as regards the power levels. The amplifying device also includes an antenna terminal 70.

The amplifying device 50 is advantageously a so-called booster amplifier that can be used, in combination with the hand-held transceiver 1, for the car radio telephone characteristics. Alternatively, it is possible to consider that the amplifying device 50 is the amplifying element of the car radio telephone. In this case it is essential that both the booster and the car radio amplifier can be structurally and functionally identical whenever the hand-held transceiver according to this invention is used, including the described interface.

According to this invention, the hand-held transceiver 1 can be carried out without the amplifying element 20, i.e. the hand-held transceiver essentially includes just the base element 10 and the terminal 30 when the connecting elements at points 11 and 12 can be left out, if so desired. Such a hand-held transceiver with a solid connection with the amplifying device 50, may be used as a car telephone.

Using the interface between the hand-held transceiver and the amplifying element/amplification device described above, starting with same base elements, it is possible to design and manufacture several modular configurations, leading to considerable advantages from the point of view of product development and production.

## Claims

1. A radio telephone device comprising a hand-held transceiver (1) having a first antenna terminal (40) and an interface, and an amplifying unit (50) having a second antenna terminal (70), characterized in that:
said hand-held transceiver comprises a base element (10) connected to said interface, and an amplifying element (20) connected to said first antenna terminal (40) at one end and to said interface at another end (11,12) to enable the transmission and amplification of signals (Tx,Rx) between said interface and said first antenna terminal (40); and
said amplifying unit (50) comprises connector means (60) for coupling it to said interface to enable the transmission and amplification of signals (Tx,Rx) between said interface and said second antenna terminal (70).

2. A device according to claim 1 characterised in that the interface comprises switching means (11,12) to selectively connect the base element (10) to either the amplifying element (20) or the amplifying unit (50).

3. A device according to claim 1 or 2 characterized by the fact that its interface comprises at least two mechanical terminals (11,12) whereby the respective reception and transmission signals (Rx, Tx) will be switched to their respective terminals.

4. A device according to claims 1 to 3 characterized by the fact that the reception and transmission signals (Rx, Tx) of the above mentioned interface are radio frequency signals.

5. A device according to claim 1, characterized by the fact that the interface includes an electric terminal (13) also for the power level control signal (Txc).

6. A device according to one of the previous claims, characterized by the fact that the amplifying unit (50) acts as a booster amplifier.

7. A device according to one of the claims 1 to 5, characterized by the fact that the amplifying unit (50) is the amplifying element of a car telephone.

8. A device according to the claims 6 or 7 characterized by the fact that the amplifying devices (20, 50) are functionally and/or structurally identical.

9. An amplifying unit (50) according to one of the claims 6, 7 or 8 characterized by the fact that it may be connected with a hand held transceiver (1) without an amplifying device (20).

## Patentansprüche

1. Funktelefongerät, in dem ein Handsendeempfänger (1) mit einem ersten Antennenanschluß (40) und einer Schnittstelle, und eine Verstärkereinheit (50) mit einem zweiten Antennenanschluß (70) enthalten sind, **dadurch gekennzeichnet,** daß der Handsendeempfänger ein mit der Schnittstelle verbundenes Basiselement (10) sowie ein Verstärkerelement (20) enthält, das an einem Ende mit dem ersten Antennenanschluß (40) und am anderen Ende (11,12) mit der Schnittstelle verbunden ist, um das Senden und Verstärken von Signalen (Tx, Rx) zwischen der Schnittstelle und dem ersten Antennenanschluß (40) zu ermöglichen; und
die Verstärkereinheit (50) Verbindungsmittel (60) zu ihrer Kopplung mit der Schnittstelle enthält, um das Senden und Verstärken von Signalen (Tx, Rx) zwischen der Schnittstelle und dem zweiten Antennenanschluß (70) zu ermöglichen.

2. Gerät nach Anspruch 1, **dadurch gekennzeichnet,** daß die Schnittstelle Schaltmittel (11, 12) enthält, um das Basiselement (10) wahlweise entweder mit dem Verstärkerelement (20) oder der Verstärkereinheit (50) zu verbinden.

3. Gerät nach Anspruch 1 oder 2, **dadurch gekennzeichnet,** daß seine Schnittstelle mindestens zwei mechanische Anschlüsse (11,12) enthält, durch die die jeweiligen Empfangs- und Sendesignale (Rx, Tx) an ihre Jeweiligen Anschlüsse geschaltet werden.

4. Gerät nach Anspruch 1 bis 3, **dadurch gekennzeichnet,** daß die Empfangs- und Sendesignale (Rx, Tx) der oben erwähnten Schnittstelle Funkfrequenzsignale sind.

5. Gerät nach Anspruch 1, **dadurch gekennzeichnet,** daß die Schnittstelle auch einen elektrischen Anschluß (13) für das Leistungspegelsteuersignal (Txc) enthält.

6. Gerät nach einem der vorangegangenen Anspüche, **dadurch gekennzeichnet,** daß die Verstärkereinheit (50) als Zusatzverstärker arbeitet.

7. Gerät nach einem der Ansprüche 1 bis 5, **dadurch gekennzeichnet,** daß die Verstärkereinheit (50) das Verstärkerelement eines Autotelefons ist.

8. Gerät nach Anspruch 6 oder 7, **dadurch gekennzeichnet,** daß die Verstärkereinrichtungen (20, 50) funktionell und/oder strukturell identisch sind.

9. Verstärkereinheit (50) nach einem der Ansprüche 6,7 oder 8, **dadurch gekennzeichnet,** daß sie mit einem Handsendeempfänger (1) ohne Verstärkereinheit (20) verbunden sein kann.

## Revendications

1. Un dispositif de radiotéléphone comportant un émetteur-récepteur (1) ayant une première borne d'antenne (40) et une interface, ainsi qu'une unité d'amplification (50) ayant une seconde borne d'antenne (70), caractérisé en ce que:
ledit émetteur-récepteur comporte un élément de base (10) connecté à ladite interface, et un élément d'amplification (20) connecté à ladite première borne d'antenne (40) à une extrémité, et à ladite interface à une autre extrémité (11,12) pour permettre la transmission et l'amplification de signaux (Tx,Rx) entre ladite interface et ladite première borne d'antenne (40) ; et
ladite unité d'amplification (50) comporte un moyen connecteur (60) pour la coupler à ladite interface, afin de permettre la transmission et l'amplification des signaux (Tx,Rx) entre ladite interface et ladite seconde borne d'antenne (70).

2. Un dispositif selon la revendication 1 caractérisé en ce que l'interface comporte un moyen de commutation (11,12) pour connecter de manière sélective l'élément de base (10) soit à l'élément d'amplification (20), soit à l'unité d'amplification (50).

3. Un dispositif selon la revendication 1 ou 2 caractérisé par le fait que son interface comporte au moins deux terminaux mécaniques (11,12) par quoi les signaux respectifs de réception et de transmission (Rx,Tx) seront commutés vers leurs bornes respectives.

4. Un dispositif selon l'une des revendications 1 à 3, caractérisé par le fait que les signaux de réception et de transmission (Rx,Tx) de l'interface mentionnée au dessus sont des signaux de radiofréquence.

5. Un dispositif selon la revendication 1, caractérisé par le fait que l'interface comporte une borne électrique (13) aussi pour le signal de commande du niveau de puissance (Txc).

6. Un dispositif selon l'une des revendications précédentes, caractérisé par le fait que l'unité d'amplification (50) agit comme un amplificateur de puissance.

7. Un dispositif selon l'une des revendications 1 à 5, caractérisé par le fait que l'unité d'amplification (50) est l'élément d'amplification d'un téléphone de voiture.

8. Un dispositif selon les revendications 6 ou 7, caractérisé par le fait que les dispositifs d'amplification (20,50) sont fonctionnellement et/ou structurellement identiques.

9. Une unité d'amplification (50) selon l'une des revendications 6, 7 ou 8, caractérisée par le fait qu'elle puisse être connectée à l'émetteur-récepteur (1) sans dispositif d'amplification (20).
